**Europäisches Patentamt**

**European Patent Office**

**Office européen des brevets**

(19)

(11) Veröffentlichungsnummer : **0 009 719**
**B1**

(12) **EUROPÄISCHE PATENTSCHRIFT**

(45) Veröffentlichungstag der Patentschrift :
**30.03.83**

(21) Anmeldenummer : **79103524.9**

(22) Anmeldetag : **19.09.79**

(51) Int. Cl.³ : **B 01 J 47/00, C 02 F 1/42,
C 25 D 21/22**

(54) **Vorrichtung zur Sichtbarmachung einer metallspezifischen Beladung eines Ionenaustauschers.**

(30) Priorität : **07.10.78 DE 2843882**

(43) Veröffentlichungstag der Anmeldung :
**16.04.80 Patentblatt 80/08**

(45) Bekanntmachung des Hinweises auf die Patenterteilung : **30.03.83 Patentblatt 83/13**

(84) Benannte Vertragsstaaten :
**AT BE CH FR GB IT NL SE**

(56) Entgegenhaltungen :
**DE A 1 517 563**
**DE A 2 157 275**
**DE C 971 771**
**FR A 1 512 912**
**FR A 2 076 370**
**US A 3 502 599**

(73) Patentinhaber : **DORNIER SYSTEM GmbH**
**Postfach 1360**
**D-7990 Friedrichshafen (DE)**

(72) Erfinder : **Wahl, Klaus, Dipl.-Ing.**
**Fitzenweilerstrasse 11**
**D-7778 Markdorf (DE)**
Erfinder : **Purps, Klaus, Dipl.-Ing.**
**Dr. Zimmermannstrasse 31**
**D-7759 Hagnau (DE)**

(74) Vertreter : **Landsmann, Ralf, Dipl.-Ing.**
**Kleeweg 3**
**D-7990 Friedrichshafen 1 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Vorrichtung zur Sichtbarmachung einer metallspezifischen Beladung eines Ionenaustauschers

Die Erfindung betrifft Vorrichtungen zur Sichtbarmachung einer metallspezifischen Beladung eines Ionenaustauschers.

Zur Beladungsanzeige bei Ionenaustauschern werden neben physikalischen Meßverfahren (pH-Messung, elektrische Leitfähigkeit), die jedoch bestenfalls den Durchbruch der Ionen am Auslauf anzeigen können, Indikatorharze verwendet, die ebenfalls auf die pH-Änderung des Harzes reagieren und jeweils die vollständige Abgabe der $H^+$-Ionen bei Kationenaustauschern oder $OH^-$-Ionen bei Anionenaustauschern anzeigen.

Diese Anzeigen sind unspezifisch und ermöglichen keine Aussage über die Ionenart, gegen die die $H^+/OH^-$-Ionen ausgetauscht worden sind.

Für die Metallrückgewinnung ist nun aber die Aussage ungenügend, daß ein Ionenaustauscherbehälter beladen ist, vielmehr ist es für die nachfolgenden Rückgewinnungsprozesse von Bedeutung zu wissen, daß der Austauscher mit Metallionen einer bestimmten Art voll beladen ist. Dies wird anhand des nachfolgenden Beispiels verdeutlicht :

In einem Galvanikbetrieb wird ein Ionenaustauscher allein zur Rückgewinnung von Edelmetallen aus Spülwässern eingesetzt, die anschließend erforderliche Abwasserbehandlung übernimmt eine zentrale Entgiftungsanlage. Im Spülwasser existieren neben den wertvollen Ionen, z. B. $Au(CN)_2^-$-Ionen, wertlose oder sogar giftige $CN^-$-, $HPO_3^-$-u. a. Ionen, die alle vom Ionenaustauscher absorbiert werden. Erfahrungsgemäß verdrängen die Komplexionen jedoch die schwachsauren Anionen, so daß später eine überwiegende Komplexbeladung im Ionenaustauscherharz festgestellt werden kann. Wann dieser Zustand eingetreten ist, kann mit Hilfe des erfindungsgemäßen Verfahrens und der erfindungsgemäßen Vorrichtungen festgestellt werden.

Der Erfindung liegt die Aufgabe zugrunde, Vorrichtungen zur Sichtbarmachung einer metallspezifischen Beladung eines Ionenaustauschers zu schaffen.

Diese Aufgabe wird erfindungsgemäß dadurch gelöst, daß sich hinter dem Schauglas ein Siebkorb mit einem Gemisch aus den Harzteilchen und — vorzugsweise farbigen — Inertteilchen mit ähnlicher Körnung wie die der Harzteilchen befindet, wobei für die Rohdichte $\delta_R$ der Inertteilchen die Beziehung gilt : $\delta_R$ der Harzteilchen, beladen mit $CN^- < \delta_R$ der Inertteilchen $< \delta_R$ der Harzteilchen, beladen mit Metallionen.

Eine weitere Vorrichtung zur Sichtbarmachung der metallspezifischen Beladung eines Ionenaustauschers ist dadurch gekennzeichnet, daß sich hinter dem Schauglas in einem geschlossenen Siebkorb ein durchströmbarer Sinkkörper befindet, der ein Gemisch aus Harzteilchen und schwimmfähigen Inertteilchen enthält und der im unbeladenen Zustand spezifisch leichter und im mit den Metallionen beladenen Zustand spezifisch schwerer ist als die zu behandelnde Flüssigkeit.

Die Erfindung wird nachfolgend anhand von Figuren näher erläutert.

Es zeigen :

Figuren 1 und 2 erfindungsgemäße Vorrichtungen zur Sichtbarmachung der metallspezifischen Beladung eines Ionenaustauschers.

In Fig. 1a bis 1c befindet sich hinter einem Schauglas 8 beladbares Harz 10 und Inertteilchen 12. Beide Teilchen weisen eine ähnliche Körnung auf, damit eventuelle Strömungseffekte ausgeglichen werden können. Die Inertteilchen sind vorzugsweise farblich gekennzeichnet und besitzen eine Rohdichte $\delta_R$, die zwischen folgenden Grenzen liegt :

$\delta_R$ der Harzteilchen, beladen mit $CN < \delta_R$ der Inertteilchen $< \delta_R$ der Harzteilchen, beladen mit Metallionen.

Beispielsweise ergibt sich für Abwasser mit cyanidischem Gold

$1,10 \text{ g/cm}^3 < \delta_R$ Inertteilchen $< 1,32 \text{ g/cm}^3$.

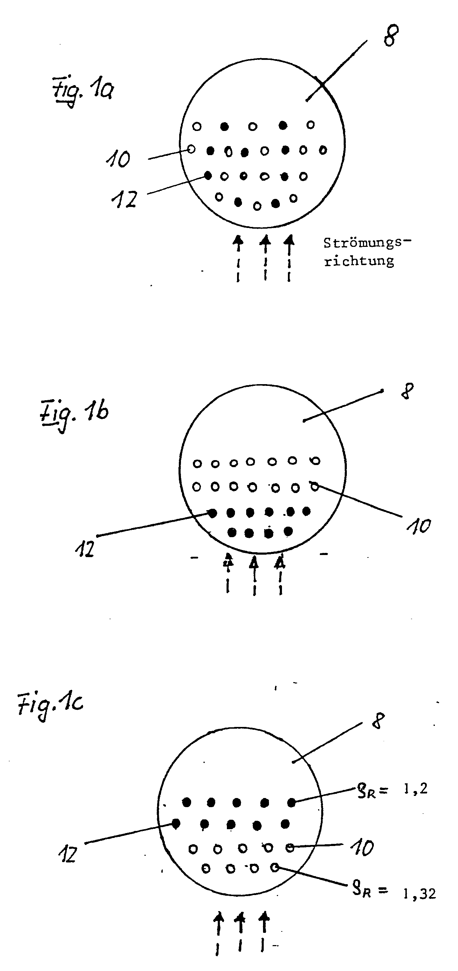

Wählt man für die Inertteilchen ein $\delta_R = 1,20 \text{ g/cm}^3$ aus, dann werden sich die verschiedenen Teilchen entsprechend ihrer Rohdichte entmischen, wobei dieser Vorgang durch die Strömung rascher abläuft und die folgenden Phasen auftreten, die in Fig. 1a bis 1c dargestellt sind.

Fig. 1a : Nach dem Einfüllen eines Gemenges, bei dem das Harz unbeladen ist ($\delta_R = 1,07$) und vor der Durchströmung befinden sich Harzteilchen 10 und Inertteilchen 12 ungeordnet im Schauglas.

Fig. 1b : Nach Durchströmung und nach Primärbeladung mit $CN^-$-Ionen sind die Inertteilchen 12 an den Boden des Schauglases abgesunken. Werden die Harzteilchen 10 nun nach und nach mit den für die Rückgewinnung wertvollen Metallionen beladen, dann stellt sich zwischenzeitlich der Zustand ein, der in Fig. 1a gezeigt ist, wobei entsprechend dem Beladungsgrad die ungeordnete Verteilung zwischen Harzteilchen 10 und Inertteilchen 12 nach und nach verschwindet und sich nunmehr die mit schweren Metallionen beladenen Harzteilchen 10 am Boden sammeln.

Dies ist in Fig. 1c gezeigt. Harzteilchen und Inertteilchen haben sich vollständig entmischt. Die Harzteilchen 10 befinden sich am Boden des Schauglases, die Inertteilchen 12 sind darüber gelagert. Dies ist eine deutliche Anzeige dafür, daß der Ionenaustauscherbehälter nunmehr mit den für die Rückgewinnung wertvollen Metallionen voll beladen ist und ausgetauscht werden muß. Der Ionenaustauscherbehälter wird nun zu einer Rückgewinnungsanstalt gebracht, die das wertvolle Metall, im vorliegenden Beispiel Gold, zurückgewinnt.

Die Trennlinie zwischen dem Harz und dem Inertmaterial zeigt die Beladung des Ionenaustauscherharzes an, wobei je nach Lage des Harzes (über oder unter der Trennlinie) zu erkennen ist, welche der in der Flüssigkeit vorhandenen Ionenart die Beladung verursacht.

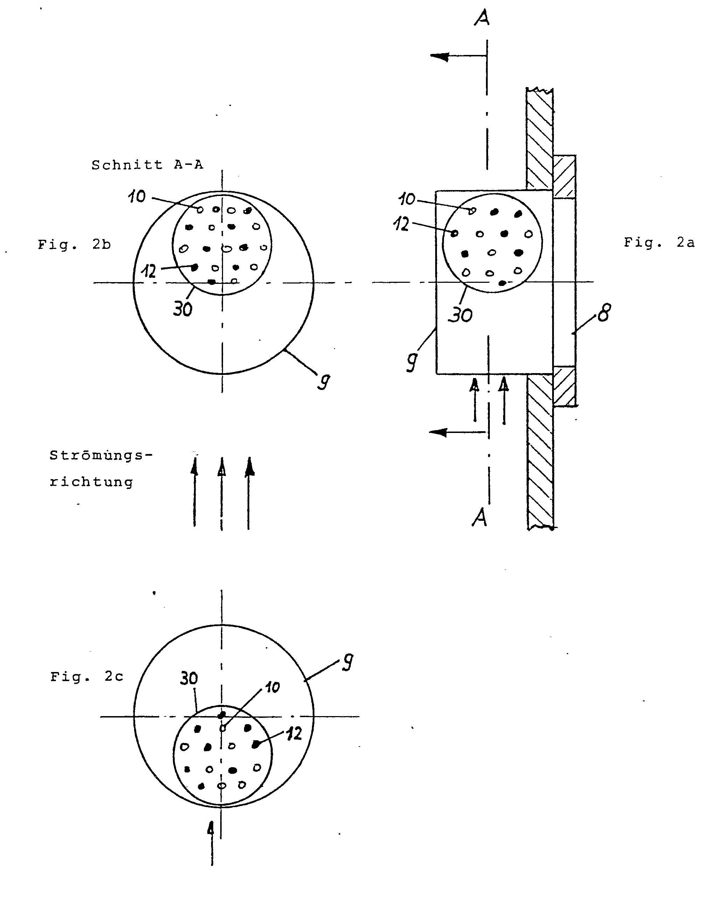

Fig. 2a zeigt ein Schauglas 8, hinter dem sich ein Sinkkörper 30 beliebiger Gestalt befindet, der aber vorzugsweise als Kugel ausgebildet ist und sich in einem Siebkorb 9 befindet.

Der Sinkkörper 30 wird mit Ionenaustauscherharz in Form von Harzteilchen 10 und schwimmfähigen Inertteilchen 12 derart gefüllt, daß die Füllung zu mindestens 50 Vol % , besser aber zu 90 Vol % aus Ionenaustauscherharz besteht und im befeuchteten Zustand (mit Wasser gesättigt), eine Rohdichte $\delta_R$ von $< 1$ g/cm$^3$ (z. B. 0,83 g/cm$^3$) erreicht. In Fig. 2a schwimmt der Sinkkörper 30 am oberen Rand des hinter dem Schauglas 8 befindlichen Siebkorbes 9.

Nimmt man eine Harzfüllung von 80 % an, so sind in einem Sinkkörper von 1 cm$^3$ etwa 0,8 cm$^3$ Harz enthalten, welches Anionen in der Größenordnung von 0,8 mval (Äquivalentgewicht) aufnehmen kann. Wird nun der Sinkkörper·beispielsweise mit CN$^-$-Ionen beladen, so bedeutet dies eine Gewichtszunahme von 20,8 mg, wodurch sich die Rohdichte des Sinkkörpers auf 0,850 8 g/cm$^3$ erhöht. Der Sinkkörper 30 bleibt schwimmfähig, wie in Fig. 2b dargestellt ist. Wird nun der Sinkkörper beispielsweise mit Au(CN)$_2^-$-Ionen beladen, so erfährt er eine Gewichtszunahme um 197 mg. Die Rohdichte des Sinkkörpers erhöht sich auf 1,029 g/cm$^3$. Der Sinkkörper 30 sinkt an den Boden des Siebkorbs 9, wie in Fig. 2c dargestellt. Dies ist eine deutliche Anzeige für die Beladung des Ionenaustauschers. Die Füllung im Sinkkörper 30 wird jeweils so gemischt, daß eine Dichtezunahme des Sinkkörpers durch die anzuzeigende Ionenart über 1 g/cm$^3$ erreicht wird (bei reinem Wasser und ca. 18 °C, ansonsten ist die Dichte der jeweiligen Salzlösung bei der entsprechenden Temperatur der Lösung maßgebend), während sie bei den unerwünschten Ionen unter 1 g/cm$^3$ bleibt.

Der Sinkkörper 30 besteht aus einem durchlässigen Kunststoffgehäuse und ist zusammenschraubbar oder besitzt zumindest eine verschließbare Öffnung.

Bei der Regenerierung des Harzes spielt sich der Vorgang in umgekehrter Reihenfolge ab, so daß die Vorrichtungen auch hierfür geeignet sind.

Ausführungsbeispiele

Die Harzteilchen der Ausführungsformen von Ansprüchen 1 und 2 sind beispielsweise poröse Kugeln auf Polystyrolbasis oder anderer Kunststoffbasis im Korngrößenbereich von 0,1 bis 3,0 mm.

Die Inertteilchen der Ausführungsform von Anspruch 1 sind beispielsweise Kugeln auf Kunststoffbasis mit einer beliebigen Färbung, die sie deutlich von den Harzteilchen unterscheidbar macht, und haben eine Korngrösse von 0,1 bis 3,0 mm.

Die Inertteilchen der Ausführungsform von Anspruch 2 sind beispielsweise Polypropylen-Hohlkörper (kugelig oder von anderer Gestalt) oder andere säurefeste und laugenfeste Kunststoffkörper mit einer Rohdichte, die kleiner ist als die der durchströmenden Lösung.

**Ansprüche**

1. Vorrichtung zur Sichtbarmachung einer metallspezifischen Beladung eines Ionenaustauschers, mit einem Schauglas, dadurch gekennzeichnet, daß sich hinter dem Schauglas (8) ein Siebkorb mit einem Gemisch aus Harzteilchen und — vorzugsweise farbigen — Inertteilchen mit ähnlicher Körnung wie die der Harzteilchen befindet, wobei für die Rohdichte $\delta_R$ der Innertteilchen die Beziehung gilt : $\delta_R$ der Harzteilchen, beladen mit CN$^- < \delta_R$ der Inertteilchen $< \delta_R$ der Harzteilchen, beladen mit Metallionen.

2. Vorrichtung zur Sichtbarmachung einer metallspezifischen Beladung eines Ionenaustauschers, mit einem Schauglas, dadurch gekennzeichnet, daß sich hinter dem Schauglas (8) in einem geschlossenen Siebkorb (9) ein durchströmbarer Sinkkörper (30) befindet, der ein Gemisch aus Harzteilchen und schwimmfähigen Inertteilchen enthält und der im unbeladenen Zustand spezifisch leichter und im mit den Metallionen beladenen Zustand spezifisch schwerer ist als die zu behandelnde Flüssigkeit.

**Claims**

1. Device for rendering visible a specific metal charge of an ion exchanger comprising transparent viewing means, permeable container means behind said viewing means, and a mixture of chargeable resin particles and — preferably coloured — inert particles with similar granulation as the resin particles in said container means, the rough density of the inert particles having the following relation : $\delta_R$ of the resin particles, charged with CN$^- < \delta_R$ of the inert particles $< \delta_R$ of the resin particles, charged with metal ions.

2. Device according to claim 1 in which said permeable container means behind said viewing means, permeable sinkable body means in a closed permeable container means, and a mixture, in said sinkable body means, of chargeable resin particles and floatable inert particles, said mixture in said sinkable body means being of lower density in an uncharged state and being of higher density than a liquid to be treated in a state of being charged with metal ions.

**Revendications**

1. Dispositif pour visualiser une charge spécifique métallique d'un échangeur d'ions, comprenant un verre indicateur, caractérisé par le fait que derrière le verre indicateur (8) est prévu un panier perforé avec un mélange de particules de résine et de particules inertes, de préférence colorées, de granulométrie similaire à celle des particules de résine, la densité apparente $\delta_R$ des particules inertes satisfaisant à la relation : $\delta_R$ des particules de résine chargées en $CN^- < \delta_R$ des particules inertes $< \delta_R$ des particules de résine chargées d'ions métalliques.

2. Dispositif pour visualiser une charge spécifique métallique d'un échangeur d'ions, comportant un verre indicateur, caractérisé par le fait que derrière le verre indicateur (8) se trouve, dans un panier perforé fermé (9), un corps flottant perméable (30) qui contient un mélange de particules de résine et de particules inertes flottables et qui, à l'état non chargé, présente un poids spécifique inférieur à celui du liquide à traiter, et à l'état chargé en ions métalliques, un poids spécifique plus grand que celui du liquide à traiter.

Fig. 1a

8

10

12

Strömungsrichtung

Fig. 1b

8

10

12

Fig. 1c

8

$g_R = 1,2$

12

10

$g_R = 1,32$

1

Fig. 2a

Fig. 2b

Schnitt A-A

Strömungsrichtung

Fig. 2c

2